(19) **Europäisches Patentamt**
**European Patent Office**
**Office européen des brevets**

(11) **EP 3 385 496 B1**

(12) **EUROPEAN PATENT SPECIFICATION**

(45) Date of publication and mention
of the grant of the patent:
**13.11.2019 Bulletin 2019/46**

(51) Int Cl.:
**E21B 19/09** *(2006.01)*          **G01K 3/10** *(2006.01)*
**E21B 19/00** *(2006.01)*

(21) Application number: **17164706.8**

(22) Date of filing: **04.04.2017**

(54) **METHOD FOR EVALUATING TEMPERATURES IN ACTIVE HEAVE COMPENSATION ROPES**

VERFAHREN ZUR TEMPERATURBEURTEILUNG BEI AKTIVEN
SEEGANGSKOMPENSATIONSSEILEN

PROCÉDÉ D'ÉVALUATION DE TEMPÉRATURES DANS DES CÂBLES DE COMPENSATION
ACTIVE DE TANGAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.10.2018 Bulletin 2018/41**

(73) Proprietor: **Redaelli Tecna S.p.A.
20135 Milano (IT)**

(72) Inventors:
• **MELEDDU, Maurizio
25063 Gardone Val Trompia (BS) (IT)**
• **FOTI, Francesco
20133 Milano (IT)**
• **MARTINELLI, Luca
20133 Milano (IT)**

(74) Representative: **Bruni, Giovanni
Laforgia, Bruni & Partners
Corso Duca degli Abruzzi, 2
10128 Torino (IT)**

(56) References cited:
• **Olav Vennemann ET AL: "Bending fatigue testing
of large diameter steel wire rope for subsea
deployment applications", Proceedings of the
Eighteenth (2008) International Offshore and
Polar Engineering Conference, Vancouver, BC,
Canada, July 6-11, 2008, 6 July 2008 (2008-07-06),
pages 42-47, XP055407049, ISBN:
978-1-880653-70-8 Retrieved from the Internet:
URL:https://www.onepetro.org/download/conf
erence-paper/ISOPE-I-08-065?id=conference-
paper/ISOPE-I-08-065 [retrieved on 2017-09-15]**
• **FRANCESCO FOTI ET AL: "A new approach to
the definition of self-damping for stranded
cables", MECCANICA, vol. 51, no. 11, 17 May 2016
(2016-05-17), pages 2827-2845, XP055406933, NL
ISSN: 0025-6455, DOI:
10.1007/s11012-016-0444-9**
• **FRANCESCO FOTI ET AL: "Mechanical modeling
of metallic strands subjected to tension, torsion
and bending", INTERNATIONAL JOURNAL OF
SOLIDS AND STRUCTURES, vol. 91, 1 August
2016 (2016-08-01), pages 1-17, XP055406932, US
ISSN: 0020-7683, DOI:
10.1016/j.ijsolstr.2016.04.034**
• **A. CARDOU ET AL: "Mechanical Models of Helical
Strands", APPLIED MECHANICS REVIEWS, vol.
50, no. 1, 1 January 1997 (1997-01-01), pages 1-14,
XP055406648, US ISSN: 0003-6900, DOI:
10.1115/1.3101684**

**EP 3 385 496 B1**

- "IEEE Standard for Calculation of Bare Overhead Conductor Temperature and Ampacity Under Steady-State Conditions;ANSI/IEEE Std 738-1986", IEEE STANDARD, IEEE, PISCATAWAY, NJ, USA, 31 December 1985 (1985-12-31), pages 1-19, XP017694905, ISBN: 978-0-7381-7439-6
- M. Meleddu ET AL: "Temperature in Active Heave Compensation Rope", 2017 OIPEEC Conference, La Rochelle (France), April 4th-6th 2017, 19 April 2017 (2017-04-19), pages 1-23, XP055406958, Retrieved from the Internet: URL:http://formulone.redaelli.com/papers/Temperature on heave compensation.pdf [retrieved on 2017-09-15]
- M. Meleddu ET AL: "Temperatures in active heave compensation ropes", Rope - Present and Future. Proceedings of the OIPEEC Conference 2017, 20 April 2017 (2017-04-20), pages 1-18, XP055407679, Heddon Lodge, Sires Hill, Didcot, Oxfordshire, OX119BG ISBN: 978-0-9552500-4-0 Retrieved from the Internet: URL:http://formulone.redaelli.com/papers/Temperature on heave compensation rope - OIPEEC April 2017.pdf [retrieved on 2017-09-19]

**Description**

Field of the invention

The present invention relates to a method for evaluating temperatures in active heave compensation ropes. In particular, the present method measures the temperature generated, due to rope's back-and-forth movement over a sheave in operation's speed and analyzes the consequences of applying thermal fields on wires.

Background art

As it is known, wire ropes or, simply, ropes were widely used for subsea installations, however, in the recent years there has been a dramatic increase in the requests for wire ropes capable to withstand harsher work conditions. The users need larger and longer wires ropes which can undergo heavier works and loads. All these has forced the wire rope manufacturers to take part in this quest of better, bigger and more mighty to tackle the ever-larger dynamic loads and the more extreme bending cycles. Active Heave Compensation system (AHC) is one of the factors influencing the most, life expectancy of wire ropes in Abandonment and Recovery applications. AHC is used in order to keep the loads stable with respect to the seabed by undermining the water and thus the vessel's movements due to the offshore climate.
These continuous back and forth rope movements with respect to the point of equilibrium induce extra stresses on the rope, which are caused by repeated stretching and bending, as well as dynamic loading. These lead to a wear, fatigue and temperature increment on the same portion of the rope, while the payload is static with respect to the seabed. The fatigue damages characteristics of steel wire rope throughout its service life, which has been topic of an in-depth study by Schrems K. ("Wear-related fatigue in a wire rope failure", Journal of Testing and Evaluation 22, no. 5 (1994): p. 490-499 (https:// doi.org/10.1520/JTE12670J). Many studies have been carried out during the years on the smaller ropes while there is a lack of information and studies on larger diameters, moreover, the effect of temperature on the mechanical behavior of the ropes has not been tackled in-depth yet.
The process leading the variation of mechanical properties on high carbon drawn steel wire has been largely investigated for years. Nevertheless, none of the known method are concentrated on the investigation of specific window of interest in terms of temperature and related mechanism leading the heating generation.

Relevant scientific literature :

-    Foti, F., Martinelli, L. & Perotti, F.: "A new approach to the definition of self-damping for stranded cables", Meccanica (2016) Volume 51, p. 2827-2845 (https:// doi.org/10.1007/s11012-016-0444-9) discloses a mechanical model for stranded ropes.
-    Foti, F., Martinelli, L.: "Mechanical modeling of metallic strands subjected to tension, torsion and bending", International Journal of Solids and Structures, Volume 91, August 2016, p. 1-17 (https://doi.org/10.1016/j.ijsolstr.2016.04.034) discloses a mechanical model for stranded ropes subjected to tension, torsion and bending.
-    Cardou, A., Jolicoeur, C.: "Mechanical models of helical strands", Applied Mechanics Reviews 50(1), 1997, p. 1-14 (https://doi.org/10.1115/1.3101684) is a review article classifying mechanical models of elastic behaviour of helical strands.
-    IEEE Standard for calculation of bare overhead conductor temperature and ampacity under steady-state conditions (ANSI/IEEE St 738-1986), 31 December 1985, p. 1-19 (https://doi.org/10.1109/IEEESTD.1985.6135468) is an American National Standard giving the formulas for the fundamental heat balance equation in the case of a bare overhead line, the forced convected heat loss (qc), the radiated heat loss (qr) and the solar heat gain (qs) of said line.

Summary of the invention

Aim of the present invention is to provide a method for evaluating the amount of heating generated on a rope during an intense use of AHC. Under thermal cycling exposition, the high-hardened drawn wires undergo changes in their mechanical properties. These characteristics are the Breaking Strength (Rm), Yield Strength (Rp02) and the Elongation at break (Ez), defined as:

$$Ez = 100 \ (L-L0)/L0$$

where L0 is the initial length of the wire and L is the length of the wire at break.

The investigation of these changes highlights a faster deterioration of material's ductility when the wires are exposed to a thermal field, generally within the range of 50°C to 150°C (according to data gathered from the field). An aspect of the invention is therefore a method to investigate how a thermal influence within the mentioned range of temperature (in accordance to the data coming from the field) induces a fast deterioration of ductility. In particular, the method evaluates the temperature reached by the rope and compares such temperature with a predetermined temperature threshold above which the fast deterioration of ductility is reached.

According to the present invention, a method for evaluating temperatures in active heave compensation ropes is described, the method having the characteristics as in the enclosed independent claim.

Further embodiments of the invention, preferred and/or particularly advantageous, are described according to the characteristics as in the enclosed dependent claims.

Brief description of the drawings

The invention will be now described by reference to the enclosed drawings, which show some non-limitative embodiments, namely:

Figure 1 show a flow-chart of the method according to the present invention;
Figure 2 is a schematic representation of the geometry of a wire rope;
Figure 3a is a schematic representation of a straight strand subjected to a combination of axial-torsional and bending loads;
Figure 3b is a schematic representation of a straight strand generalized stresses on the wire cross section;
Figure 4 is a graph showing a cross sectional bending response of the rope to the mechanical model of the rope.

Detailed description

A method for evaluating temperatures in active heave compensation ropes has been defined correlating mechanical models and thermal models. The calibration of the model has been carried out by performing a huge experimental campaign. Set up tests have been done combining inputs (Loads, speeds, D/d), with the scope to determine the wire rope's internal and external thermal variation ($\Delta T$) with respect to the environment temperature.

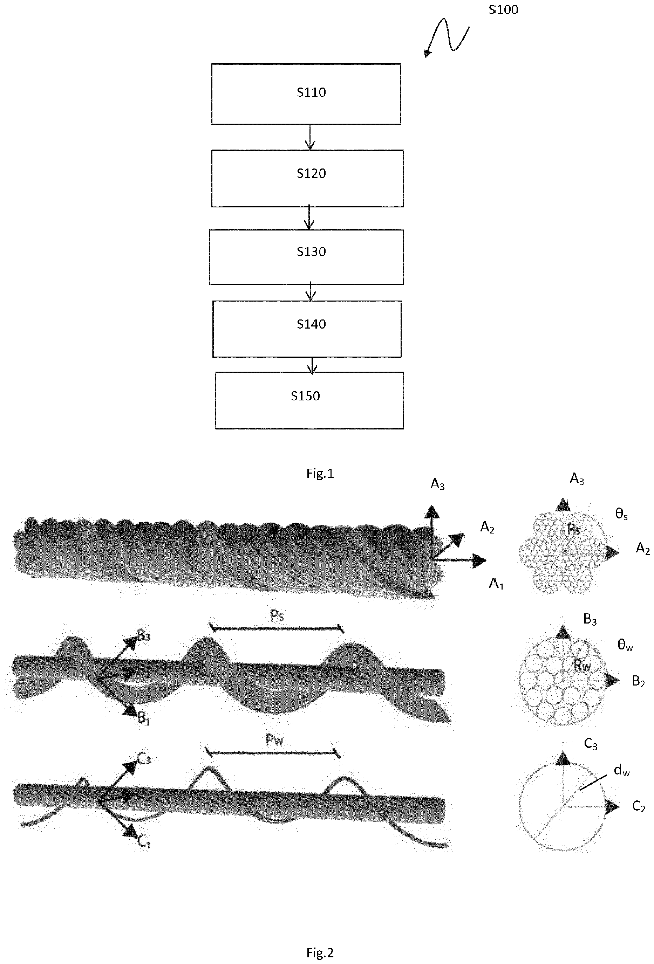

Referring now to the drawings and in particular to Figures 1, the method S100 for evaluating temperatures in active heave compensation ropes consists of the following chronological steps:

- S110 describe the geometry of wire ropes as composite structures obtained through assemblies of helical components in hierarchical levels: wires, strands and the rope itself;
- S120 use a mechanical model of the strand that represents the material properties of each wire, under the assumption of linear elastic behavior;
- S130 use a mechanical model of the rope that represents the combined action of the tensile load and of the imposed bending curvature;
- S140 use a thermal model for the evaluation of the rope temperature increase Ts with respect to the ambient temperature, the thermal model comprising two main dissipation sources: the friction between strands or rope and a sheave and the friction between wires or between strands;
- S150 compare temperature increase $T_s$ obtained by the thermal model with a value of a predetermined temperature threshold.

The geometry of wire ropes has a composite structures obtained through assemblies of helical components in hierarchical levels: the strands are helically twisted and grouped in concentric layers to form the rope and the same process forms the strands from the wires. The internal structure of the rope is completely defined by the centerline and the orientation of the transversal section of every element at each level. As an example, with reference to the wire rope in Figure 1, the following levels can be identified: wires, strands and the rope itself, and on each element a local reference system can be defined by the Serret-Frenet unit vectors. The strand centerline is described by a cylindrical helix in the frame of reference of the rope while a wire centerline is described by a cylindrical helix in the frame of the strand (and by a double, or nested, helix in the frame of the rope). The position and orientation of a component cross section in the frame of the component at the higher hierarchical level is hence completely defined as a function of two construction parameters (the helix radius R and the pitch P) and of the swept angle $\theta$. In particular, for a wire in a strand, the three parameters are referenced as Rw, Pw and $\theta$w for a wire in a strand, while are referenced as Rs, Ps and $\theta$s for a strand in a rope.

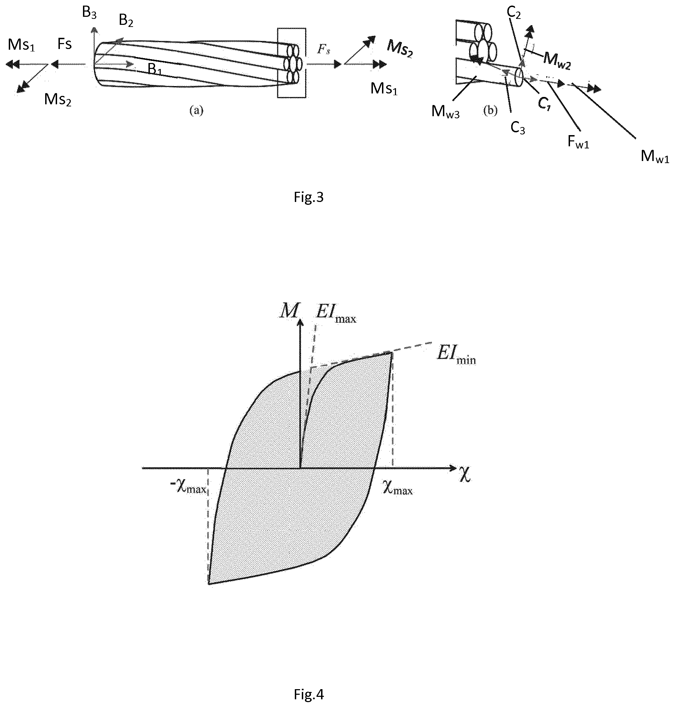

The mechanical model of the strand that is the response of the strand to mechanical loads, is characterized as elastic, and will be evaluated by neglecting friction between the wires and modelling each wire as a curved thin rod, reacting to a combination of axial force, bending and torsional moments (as shown in Figure 3a and 3b). The material properties of each wire are fully defined, under the assumption of linear elastic behavior, by specifying the Young modulus E and the Poisson coefficient v.

The stress resultant on the strand cross section is described by introducing the axial force $F_S$, the torsional moment $M_{s1}$ and the bending moment $M_{s2}$. The generalized strains, work-conjugated to the cross sectional stress resultants of the strand are the axial strain $\varepsilon_s$, the torsional curvature $X_{s1}$, and the bending curvature $X_{s2}$. Without loss of generality, a planar bending problem is herein considered, referring e.g. to for a full discussion of the kinematical assumptions at the base of this formulation and of the case of biaxial bending. By neglecting variations of the internal geometry of the strand, the following linear cross sectional constitutive equations can be introduced:

$$\begin{cases} F_s = EA_s\varepsilon_s + C_s\chi_{s1} \\ M_{s1} = C_s\varepsilon_s + GJ_s\chi_{s1} \\ M_{s2} = EI_s\chi_{s2} \end{cases} \tag{1}$$

where Fs is the axial force, $M_{s1}$ is torsional moment, $Ms_2$ is the bending moment, $EA_s$, $GJ_s$ and $EI_s$ denote, respectively, the direct axial, torsional

and bending stiffness coefficients, while $C_s$ is the axial-torsional coupling stiffness term, $X_{s1}$ is the torsional curvature, $X_{s2}$ is the bending curvature and $\varepsilon_S$ is the axial strain.

The mechanical model of the rope is the "two-stage" approximate approach outlined by Cardou and Jolicoeur (1997). It is retained also in this work to model the cross-sectional behavior of a rope subjected to the combined action of the tensile load $F_r$ and of the imposed bending curvature $X_r$. Accordingly, the solution of the bending problem is superimposed to the initial state of stress and strain due to the tensile load and the following constitutive equations are introduced under the assumption of restrained torsional rotations:

$$\begin{cases} F_r = EA_r\varepsilon_r \\ M_r = EI_{min}\chi_r + M_r^{add}\left(\varepsilon_r,\chi_r\right) \end{cases} \tag{2}$$

where $F_r$ is the tensile load, $X_r$ is the bending curvature, $EA_r$ is the direct axial stiffness of the rope, $EI_{min}$ is minimum cross sectional bending stiffness of the rope, $Mr^{add}$ is a non-linear contribution to the total bending moment, $\varepsilon_r$ and $M_r$ are the axial strain and the resultant bending moment of the rope, respectively.

The axial behavior is assumed to be independent on the bending curvature and the direct axial stiffness of the rope can be estimated as follows:

$$EA_r = \sum_{j=0}^{m} n_j \, \cos^3\left(\alpha_{s,j}\right)EA_{s,j} \tag{3}$$

where: m is the number of layers of the rope; $n_j$ is the number of strands belonging to the $j$-th layer (the index $j = 0$ refers to the core of the rope), and $\alpha_{s,j}$=tan$^{-1}(2\pi R_{s,j}/P_{s,j})$ is the lay angle of the strands in the $j$-th layer.

Two different contributions to the rope bending moment $M_r$ can be recognized in the equation (2). The first one is linear and independent of the axial strain of the strand. This term is defined taking into account only the individual bending of the strands and can be also regarded as the theoretical response of the rope under the ideal condition of 'full-slip', with no friction between the strands (or, in other terms, under the assumption of *perfectly lubricated strands*). Accordingly, the subscript *'min'* is adopted in this work to further highlight that this contribution corresponds to the minimum theoretical value for the cross sectional bending stiffness of the rope. The stiffness coefficient $EI_{min}$ can be defined as:

$$EI_{min} = \sum_{j=0}^{m} \frac{n_j}{2}\cos\left(\alpha_{s,j}\right)\left(\sin\left(\alpha_{s,j}\right)GJ_{s,j} + \left(1+\cos^2\left(\alpha_{s,j}\right)\right)EI_{s,j}\right) \tag{4}$$

The second term in equation (2), $M_r^{add}$, is non-linear and accounts for the contribution to the total bending moment of the cross section due to the axial force $F_{s,i}$ acting in the individual strands. From simple equilibrium considerations, the following expression can be obtained:

$$M_r^{add} = \sum_{j=0}^{m} \sum_{i=1}^{n_j} R_{s,j} \cos\left(\alpha_{s,j}\right) F_{s,i}\left(\theta_{s,i}\right) \sin\left(\theta_{s,i}\right) \qquad (5)$$

The axial force acting in the generic strand can be further decomposed into a first contribution, $F_{s,a}$, due to the axial load $F_r$ and a second one, $F_{s,b}$, due to the bending of the strand, i.e.: $F_s = F_{s,a} + F_{s,b}$.

Due to the cylindrical symmetry of the axial-torsional problem with respect to the centerline of the rope, the term $F_{s,a}$ is a constant along the length of the strand (and over all the strands of the same layer).

As long as the friction forces on the external surface are large enough to prevent relative displacements between the strands, i.e. in a strand stick-state, the force $F_{s,b}$ can be evaluated as:

$$F_{s,b}\left(\theta_s\right) = \cos^2\left(\alpha_s\right) R_s\ EA_s\ \sin\left(\theta_s\right) \chi_r \qquad (6)$$

The term $F_{s,b}$ generates a gradient of axial force along the strand, as can be easily derived from (6). This gives the strands a tendency to slip with respect to the neighboring ones. This gradient of axial force is resisted by the tangential friction forces acting on the lateral surface of the strand. Whenever the effect of the axial force gradient is greater than the resultant of the tangential friction forces, a strand can undergo a relative displacement with respect to the neighboring ones. A numerical strategy to evaluate the strand axial force $F_{s,b}$, accounting for the possible transition between a sticking and a slipping regime has been developed by the authors and is adopted also in this work. The numerical procedure is based on a classic Return-Map algorithm, based on a "sticking regime prediction" and a "sliding regime correction". The Return-Map algorithm delivers the value of the gradient of the strand axial force at a discrete set of control points along the pitch of the strand. Then, the strand axial force is obtained through numerical integration along the strand length.

This friction-based mechanism for the transmission of shearing stresses between the strands makes the bending behavior of the rope non-linear. Figure 3 shows a typical cross sectional moment-curvature hysteresis loop predicted by the proposed model. A cyclic curvature with limits $\pm X_{max}$ is applied to the cross section. The initial branch is characterized by the initial stiffness $EI_{max}$, corresponding to the 'full-stick' case. The tangent stiffness, then, gradually decreases as a consequence of the evolution of the inter-strand sliding phenomena. Note that $X_{max}$ is assumed as sufficiently large to achieve the limit value $EI_{min}$, which can be attained only if all strands of the cross section are in the slipping state.

Whenever a rope is bent over a sheave having diameter D, three regions can be easily defined according to the value of the curvature of its centerline. In the first one, which is far from the sheave, the rope centerline is straight and its curvature is strictly equal to zero. In the second one, which is on the contact region between the rope and the sheave, the curvature of the rope centerline is constant and can be approximately evaluated as: $X_{max} = 2/D$. The third region, which is characterized by the transition between the zero curvature and the maximum curvature $X_{max}$ imposed by the sheave, is neglected in this work. A generic cross-section of the strand passing over the sheave will be considered as bent from zero to the final curvature value $X_{max}$. The energy dissipated during the bending of the cross section (dissipated energy per unit length of the strand) can be evaluated as the area Ac enclosed in the hysteresis loop:

$$A_c = \oint M_r\left(\chi_r\right) d\chi_r \qquad (7)$$

The thermal model is based on the fact that whenever a strand or a wire rope is cyclically bent over a sheave, a portion of the total mechanical power provided as input to the system is dissipated through frictional phenomena and transformed in heat. The generated heat is then transmitted through the strand and exchanged with the environment.

Two main dissipation sources can be identified: (1) the friction between the strand (or rope) and the sheave; and (2) the friction between the components of the strand (or rope). The first source of dissipation must be evaluated on a case by case basis. Infact friction conditions also change as a function of the whole system geometry (e.g. misalignments between rope and sheave, lubrication conditions, sheaves wear status, etc.). Instead, the second one is always present and cannot be ignored, being inherently related to the alternate bending and straightening of the rope cross sections. The heat generation source g can then be estimated simply from the energy Ac(Nm/m) in equation (7), dissipated per unit of length over a full bending cycle (from zero to the curvature $X_{max}$ imposed by the sheave, and back to zero again). The thermal model for the evaluation of the temperature increase in the rope with respect to the ambient temperature is represented by an algorithm comprising two main steps:

Step 1 - Preliminary calculations:

a. Define the ambient air temperature Ta;
b. Define the air velocity $V$;
c. Define the air density $\rho f$;
d. Define the absolute air viscosity $\mu f$;
e. Define rope diameter d;
f. Define the rope coefficient of emissivity e;
g. Define the coefficient of solar absorption a;
h. Define total solar and sky radiated heat Qs;
i. Define the energy dissipated per unit length $A_c$

$$A_c \simeq 2 M_0 \chi_{\mathrm{max}}$$

where $M_0$ is the value of the bending moment, and $X_{max}$ is the curvature imposed by the sheave.
j. Define the cycle duration $t_c$;
k. Evaluate the power generated per unit length of rope g

$$g = \frac{A_c}{t_c} \quad ;$$

l. Assume the rope temperature increase $Ts$;

Step 2 -Iterative computations:

m. Define the rope convected heat loss rate per unit length $q_c$

$$q_c = \max\left\{q_{c1}, q_{c2}\right\}$$

where:

$$q_{c1} = \left(1.01 + 0.371\left(\frac{d\rho_f V}{\mu_f}\right)^{0.52}\right) k_f \left(T_s - T_a\right)$$

$$q_{c2} = 0.1695\left(\frac{d\rho_f V}{\mu_f}\right)^{0.60} k_f \left(T_s - T_a\right)$$

where $k_f$ is the thermal conductivity of air.
n. Define the rope radiated heat loss rate per unit length $q_r$

$$q_r = 0.138 d\acute{e}\left(\left(\frac{K_s}{100}\right)^4 - \left(\frac{K_a}{100}\right)^4\right)$$

where d' is the strand diameter, e is the coefficient of emissivity, and Ks is the strand (average) temperature, Ka is the ambient temperature;

o. Define the solar heat gain per unit length $q_s$

$$q_s = a Q_s \sin(\theta) A'$$

where a is the coefficient of solar absorption, Qs is the total solar and sky radiated heat, q is the effective angle of incidence of the sun rays and A' = d'/12 is the projected area of the strand;

p. Solve equation $q_c + q_r = g + q_s$ for the rope temperature increase T ;

q. Iterate Step 2 with the new value of the rope temperature increase $T_S$ computed at the previous step p. until the rope temperature increase $T_S$ is stabilized.

The results of the predictive tool have two main direct consequences both on the lubricant status, both on the durability of the rope.

The lubricant is characterized by a dropping temperature beyond which it loses its chemical and mechanical characteristics. In this case, the tool permits to simulate if the desired operational conditions lead to exceed that limit or not. Furthermore, the capability of the rope to withstand fatigue stress is direct related to the steel wires mechanical properties (Tensile strength, Yield Strength, elongation at break). As per internal research and well-known scientific literatures, these characteristics can be compromised if the steel wires are extensively exposed to thermal fields. The direct consequence is the loss of ductility, which represents the main parameter for the wire rope fatigue resistance. The monitoring of the rope's thermal status leads to the determination of this loss of ductility and consequently to the estimation of the fatigue resistance variation. In this way, the tool offers the opportunity to understand what and how particular operational conditions could lead to direct consequences into the rope.

## Claims

1. Method for evaluating temperatures in active heave compensation ropes **characterized by** comprising the following steps:

    - describe the geometry of ropes as composite structures obtained through assemblies of helical components in hierarchical levels: wires, strands and the rope itself, the parameters describing the geometry of a rope being the helix radius, the pitch and the swept angle of a wire in a strand (Rw, Pw, θw) and of a strand in a rope (Rs, Ps, θs);

    - starting from the parameters describing the geometry of a wire in a strand (Rw, Pw, θw), use a mechanical model of the strand that represents the material properties of each wire, under the assumption of linear elastic behavior, by specifying the Young modulus (E) and the Poisson coefficient (v), the parameters describing the mechanical behaviour of the strand being the axial force ($F_s$), the torsional moment ($M_{s1}$) and the bending moment ($M_{s2}$);

    - starting from the parameters describing the geometry of a strand in a rope (Rs, Ps, θs), use a mechanical model of the rope that represents the combined action of tensile loads and imposed bending curvature, the parameters describing the mechanical behaviour of the rope being the tensile load (Fr) and the bending moment ($M_r$);

    - based on the fact that whenever a strand or a wire rope is cyclically bent over a sheave, a portion of the total mechanical power provided as input to the system is dissipated through frictional phenomena which are a function of the parameters describing the mechanical behaviour of the strand and of the rope, use a thermal model for the evaluation of the rope temperature increase (Ts) with respect to the ambient temperature, the thermal model comprising two main dissipation sources: the friction between strands or rope and a sheave and the friction between wires or between strands;

    - compare the rope temperature increase (Ts) obtained by the thermal model with a value of a predetermined temperature threshold.

2. Method according to claim 1, wherein the mechanical model of the strand is calculated by linear cross sectional constitutive equations:

$$\begin{cases} F_s = EA_s\varepsilon_s + C_s\chi_{s1} \\ M_{s1} = C_s\varepsilon_s + GJ_s\chi_{s1} \\ M_{s2} = EI_s\chi_{s2} \end{cases}$$

where $F_s$ is the axial force, $M_{s1}$ is torsional moment, $M_{s2}$ is the bending moment, $EA_s$, $GJ_s$ and $EI_s$ denote, respectively, the direct axial, torsional and bending stiffness coefficients determined starting from helix radius, pitch and swept angle of a wire in a strand (Rw, Pw, θw), while $C_s$ is the axial-torsional coupling stiffness term, $X_{S1}$ is the torsional curvature, $X_{S2}$ is the bending curvature and $\varepsilon_s$ is the axial strain.

3. Method according to claim 1 or 2, wherein the mechanical model of the rope is calculated by the constitutive equation:

$$\begin{cases} F_r = EA_r\varepsilon_r \\ M_r = EI_{min}\chi_r + M_r^{add}\left(\varepsilon_r, \chi_r\right) \end{cases}$$

where $F_r$ is the tensile load, $X_r$ is the bending curvature, $EA_r$ is the direct axial stiffness of the rope, $EI_{min}$ is minimum cross sectional bending stiffness of the rope, $Mr^{add}$ is a non-linear contribution to the total bending moment, $\varepsilon_r$ and $M_r$ are the axial strain and the resultant bending moment of the rope, respectively.

4. Method according to claim 3, wherein the direct axial stiffness of the rope is estimated as follows:

$$EA_r = \sum_{j=0}^{m} n_j \ \cos^3\left(\alpha_{s,j}\right)EA_{s,j}$$

where m is the number of layers of the rope, $n_j$ is the number of strands belonging to the j-th layer, the index j = 0 refers to the core of the rope, and $\alpha_{s,j}$=tan-1($2\pi R_{s,j}/P_{s,j}$) is the lay angle of the strands in the *j*-th layer.

5. Method according to claim 3 or 4, wherein the minimum theoretical value for the cross sectional bending stiffness of the rope, the stiffness coefficient (*EI_min*) is defined as:

$$EI_{min} = \sum_{j=0}^{m} \frac{n_j}{2}\cos\left(\alpha_{s,j}\right)\left(\sin\left(\alpha_{s,j}\right)GJ_{s,j} + \left(1+\cos^2\left(\alpha_{s,j}\right)\right)EI_{s,j}\right)$$

6. Method according to any of claims from 3 to 5, wherein $Mr^{add}$ is a non-linear and accounts for the contribution to the total bending moment of the cross section due to the axial force ($F_s$) acting in the individual strands, and is defined as:

$$M_r^{add} = \sum_{j=0}^{m}\sum_{i=1}^{n_j} R_{s,j} \cos\left(\alpha_{s,j}\right)F_{s,i}\left(\theta_{s,i}\right)\sin\left(\theta_{s,i}\right)$$

where $F_s = F_{s,a} + F_{s,b}$ and $F_{s,a}$, is due to the axial load $F_r$ and $F_{s,b}$, is due to the bending of the strand and $\theta_s$ is the torsional curvature.

7. Method according to any of claims from 3 to 6, wherein the strand axial force $F_{s,b}$ is evaluated as

$$F_{s,b}\left(\theta_s\right) = \cos^2\left(\alpha_s\right)R_s \ EA_s \ \sin\left(\theta_s\right)\chi_r$$

where $X_r$ is the bending curvature.

8. Method according to any of the preceding claims, wherein the thermal model comprises a preliminary calculation for the evaluation of the temperature in the rope, said preliminary calculation comprising the following steps:

  a. Define the ambient air temperature ($T_a$);
  b. Define the air velocity (V);
  c. Define the air density ($\rho_f$);
  d. Define the absolute air viscosity ($\mu_f$);
  e. Define rope diameter (d);
  f. Define the rope coefficient of emissivity (e);
  g. Define the coefficient of solar absorption (a);
  h. Define total solar and sky radiated heat ($Q_s$);
  i. Define the energy dissipated per unit length ($A_c$)

$$A_c \simeq 2M_0 \chi_{\text{max}}$$

where $M_0$ is the value of the bending moment of the rope and $X_{\text{max}}$ is the curvature imposed by the sheave;
  j. Define the cycle duration ($t_c$);
  k. Evaluate the power generated per unit length of rope (g)

$$g = \frac{A_c}{t_c}$$

  l. Evaluate the rope temperature increase ($T_s$).

**9.** Method according to claim 8, wherein the thermal model comprise iterative computations to stabilize the temperature in the rope, said iterative computations comprise the following steps:

  m. Define the rope convected heat loss rate per unit length ($q_c$)

$$q_c = \max\left\{q_{c1}, q_{c2}\right\}$$

Where:

$$q_{c1} = \left(1.01 + 0.371\left(\frac{d\rho_f V}{\mu_f}\right)^{0.52}\right) k_f\left(T_s - T_a\right)$$

$$q_{c2} = 0.1695\left(\frac{d\rho_f V}{\mu_f}\right)^{0.60} k_f\left(T_s - T_a\right)$$

and where $q_{c1}$ and $q_{c2}$ are two empirical formulas for the calculation of the convected heat loss rate per unit length and $k_f$ refers to the thermal conductivity of air.
  n. Define the rope radiated heat loss rate per unit length (qr)

$$q_r = 0.138 d e'\left(\left(\frac{K_s}{100}\right)^4 - \left(\frac{K_a}{100}\right)^4\right)$$

where d' is the strand diameter, $K_s$ is the strand (average) temperature and Ka is the ambient temperature;
o. Define the solar heat gain per unit length ($q_s$)

$$q_s = a Q_s \sin(\theta) A'$$

where a is the coefficient of solar absorption, Qs is the total solar and sky radiated heat, q is the effective angle of incidence of the sun rays and A' = d'/12 is the projected area of the strand;
p. Solve equation

$$q_c + q_r = g + q_s$$

for the rope temperature increase ($T_s$);
q. Iterate steps from m. to p. with the new value of the rope temperature increase ($T_s$) computed at the previous step p. until the rope temperature increase ($T_s$) is stabilized.

## Patentansprüche

1. Verfahren zur Auswertung von Temperaturen in aktiven Hubkompensationskabeln, **dadurch gekennzeichnet, dass** es die folgenden Schritte umfasst:

   - Beschreibung der geometrischen Form von Kabeln als Verbundstrukturen, die durch Zusammenfügen von Wendelkomponenten nach hierarchischen Ebenen erhalten werden: Drähte, Bündel und das Kabel selbst; wobei die Parameter, die die geometrische Form eines Kabels beschreiben, der Radius der Wendel, die Steigung und der Neigungswinkel eines Drahtes in einem Bündel (Rw, Pw, Θw) und eines Bündels in einem Kabel (Rs, Ps, Θs), sind;
   - Ausgehend von den Parametern, die die geometrische Form eines Drahtes in einem Bündel (Rw, Pw, Θw) beschreiben, unter Verwendung eines mechanischen Modells des Kabels, das die Materialeigenschaften jedes Drahtes darstellt, unter Berücksichtigung eines linearen elastischen Verhaltens und unter Angabe des Elastizitätsmoduls (E) und des Koeffizienten nach Poisson (v), sind die Parameter, die das mechanische Verhalten des Kabels beschrieben, die Axialkraft ($F_a$), das Torsionsmoment ($M_{s1}$) und das Biegemoment ($M_{s2}$) ;
   - Ausgehend von den Parametern, die die geometrische Form eines Bündels in einem Kabel (Rs, Ps, Θs) beschreiben, unter Verwendung eines mechanischen Modells des Kabels, das die kombinierte Wirkung von Zugbelastungen und einer durch Biegen ausgeübten Biegung darstellt, wobei die Parameter, die das mechanische Verhalten des Kabels beschreiben, die Zugbelastung (Fr) und das Biegemoment ($M_r$), sind;
   - auf der Grundlage der Tatsache, dass jedes Mal, wenn ein aus Drähten bestehendes Bündel oder Drahtkabel zyklisch über eine Rolle gebogen wird, wird ein Teil der gesamten mechanischen Energie, die dem Systemeingang zugeführt wird, aufgrund von Reibungsphänomenen, die abhängig von den Parametern, die das mechanische Verhalten des Bündels und des Kabels beschreiben, Verwendung, anhand eines Wärmemodells der Anstieg der Kabeltemperatur (Ts) gegenüber der Umgebungstemperatur bewertet, wobei das Wärmemodell zwei Hauptdissipationsquellen umfasst: die Reibung zwischen den Bündeln oder dem Kabel und eine Riemenscheibe und die Reibung zwischen Drähten oder zwischen Bündeln;
   - Vergleich des mit dem Wärmemodell ermittelten Anstieg der Kabeltemperatur (Ts) mit einem Wert einer vorgegebenen Temperaturschwelle.

2. Verfahren nach Anspruch 1, wobei das mechanische Modell des Bündels durch lineare Gleichungen berechnet wird, die Querschnitte bilden:

$$\begin{cases} F_s = EA_s \varepsilon_s + C_s \chi_{s1} \\ M_{s1} = C_s \varepsilon_s + GJ_s \chi_{s1} \\ M_{s2} = EI_s \chi_{s2} \end{cases}$$

wobei Fs ist die axiale Kraft, $M_{s1}$ ist das Torsionsmoment, $M_{s2}$ ist das Biegemoment, und $EA_{s1}$, $GJ_s$ und $EI_s$ beziehen sich jeweils auf axiale, Torsions- und Biege-Direktsteifigkeitskoeffizienten, die ausgehend vom Radius der Wendel, der Steigung und dem Neigungswinkel eines Drahtes in einem Bündel (Rw, Pw, Θw) bestimmt werden, während Cs ist die axiale Torsionskopplungssteifigkeit, $X_{S1}$ ist die Torsionskrümmung, $X_{S2}$ die Biegekrümmung und $\varepsilon_s$ ist die axiale Ausdehnung.

3. Verfahren nach Anspruch 1 oder 2, wobei das mechanische Modell des Kabels mit Hilfe der folgenden Gleichung berechnet wird:

$$\begin{cases} F_r = EA_r \varepsilon_r \\ M_r = EI_{\min} \chi_r + M_r^{add}\left(\varepsilon_r, \chi_r\right) \end{cases}$$

wobei $F_r$ ist die Zuglast, $X_r$ ist die Biegekurve, $EA_r$ ist die direkte axiale Steifigkeit des Kabels, $EI_{\min}$ ist die minimale Biegesteifigkeit im Querschnitt des Kabels, $Mr^{add}$ ist ein nicht linearer Beitrag zum Gesamtbiegemoment, $\varepsilon_r$ und $M_r$ sind die axiale Ausdehnung und das resultierendes Biegemoment des Kabels.

4. Verfahren nach Anspruch 3, wobei die direkte axiale Steifigkeit des Kabels wie folgt geschätzt wird:

$$EA_r = \sum_{i=0}^{m} n_j \ \cos^3\left(\alpha_{s,j}\right) EA_{s,j}$$

wobei m ist die Anzahl der Lagen des Kabels, $n_j$ ist die Anzahl der Bündel, die zur j-ten Lage gehören, der Index j = 0 bezieht sich auf den Kern des Kabels, und $c_{s,j}$ = tan-1($2\pi R_{s,j}/P_{s,j}$) ist der Winkel der Verlegung der Bündel in der j-ten Lage.

5. Verfahren nach Anspruch 3 oder 4, wobei der theoretische Mindestwert für die Biegesteifigkeit im Querschnitt des Kabels, das Steifigkeitskoeffizient ($EI_{min}$), wie folgt definiert wird:

$$EI_{\min} = \sum_{j=0}^{m} \frac{n_j}{2} \cos\left(\alpha_{s,j}\right)\left(\sin\left(\alpha_{s,j}\right)GJ_{s,j} + \left(1 + \cos^2\left(\alpha_{s,j}\right)\right)EI_{s,j}\right)$$

6. Verfahren nach einem der Ansprüche 3 bis 5, wobei $M_r^{add}$ ist nichtlinear und den Beitrag zum Gesamtbiegemoment des Querschnitts berücksichtigt, der durch die in den einzelnen Bündeln wirkende Axialkraft ($F_s$)verursacht wird, und ist definiert wie folgt:

$$M_r^{add} = \sum_{i=0}^{m} \sum_{i=1}^{n_j} R_{s,j} \cos\left(\alpha_{s,j}\right) F_{s,i}\left(\theta_{s,i}\right)\sin\left(\theta_{s,i}\right)$$

wobei Fs = $F_{s,a} + F_{s,b}$ auf die axiale Belastung und $F_{s,b}$ auf die Biegung des Bündels und $\Theta_s$ auf die Torsionskrümmung zurückzuführen ist.

7. Verfahren nach einem der Ansprüche 3 bis 6, wobei die Axialkraft $F_{s,b}$ des Bündels ausgewertet wird als

$$F_{s,b}\left(\theta_s\right) = \cos^2\left(\alpha_s\right) R_s \ EA_s \ \sin\left(\theta_s\right)\chi_r$$

wobei $X_r$ ist die Biegekrümmung

8. Verfahren nach einem der vorhergehenden Ansprüche, wobei das thermische Modell eine vorläufige Berechnung zur Auswertung der Temperatur im Kabel umfasst, wobei die genannte vorläufige Berechnung die folgenden Vorgänge umfasst:

    a. Die Umgebungslufttemperatur ($T_a$) definieren;

b. Die Luftgeschwindigkeit (V) definieren;
c. Die Dichte der Luft ($\rho_f$) definieren;
d. Die absolute Viskosität ($\mu_f$) der Luft definieren;
e. Den Kabeldurchmesser (d) definieren:
f. Den Emissionskapazitätskoeffizienten € des Kabels definieren;
g. Den Sonnenabsorptionskoeffizienten (a) definieren;
h. Die die gesamte Wärme ($Q_s$) definieren, die von der Sonne und dem Himmel abgestrahlt wird;
i. Die die pro Längeneinheit verbrauchte Energie ($A_c$) definieren

$$A_c \simeq 2M_0 \chi_{max}$$

wobei $M_0$ ist der Wert des Biegemoments des Kabels und $X_{max}$ ist die durch die Riemenscheibe auferlegte Krümmung;
j. Die Dauer des Zyklus ($t_c$) definieren;
k. Die pro Längeneinheit eines Kabels (g) erzeugte Leistung bewerten

$$g = \frac{A_s}{t_c}$$

i. Den Anstieg der Kabeltemperatur ($T_s$) bewerten.

9. Verfahren nach Anspruch 8, wobei das Wärmemodell iterative Berechnungen zur Stabilisierung der Temperatur im Kabel umfasst, wobei die genannten iterativen Berechnungen die folgenden Operationen umfassen:

m. Den Wärmeverlust durch Konvektion des Kabels pro Längeneinheit ($q_c$) definieren

$$q_c = \max\{q_{c1}, q_{c2}\}$$

wobei

$$q_{c1} = \left(1.01 + 0.371\left(\frac{d\rho_f V}{\mu_f}\right)^{0.52}\right)k_f(T_s - T_a)$$

$$q_{c2} = 0.1695\left(\frac{d\rho_f V}{\mu_e}\right)^{0.60} k_f(T_s - T_a)$$

und wobei $q_{c1}$ und $q_{c2}$ zwei empirische Formeln zur Berechnung der Wärmeverlustrate durch Konvektion pro Längeneinheit sind und $k_f$ sich auf die Wärmeleitfähigkeit der Luft bezieht.
n. Die Wärmeverlustrate des Kabels pro Längeneinheit (gr) definieren

$$q_r = 0.138 d e'\left(\left(\frac{K_s}{100}\right)^4 - \left(\frac{K_a}{100}\right)^4\right)$$

wobei d'ist der Strahldurchmesser, $K_a$ ist die (durchschnittliche) Temperatur des Strahls und $K_a$ ist die Umgebungstemperatur;
o. Den Solarwärmegewinn pro Längeneinheit (qs) definieren

$$q_s = aQ_s \sin(\theta) A'$$

wobei a ist der Sonnenabsorptionskoeffizient, Qs ist die von Sonne und Himmel abgestrahlte Gesamtwärme, q ist der tatsächliche Einfallswinkel der Sonnenstrahlen und A' = d'/12 ist die projizierte Fläche des Strahls.
p. Die Gleichung

$$q_c + q_r = g + q_s$$

zur Erhöhung der Kabeltemperatur ($T_s$) lösen.
q. Die Schritte von m bis p mit dem neuen Wert der Kabeltemperaturerhöhung ($T_a$) wiederholen, der im vorherigen Vorgang p berechnet wurde, bis sich die Kabeltemperaturerhöhung ($T_a$) stabilisiert hat.

**Revendications**

1. Procédé d'évaluation des températures dans des câbles de compensation de levage actifs, **caractérisé en ce qu'**il comprend les opérations suivantes:

   - décrire la forme géométrique des câbles sous forme de structures composites obtenues en assemblant des composants hélicoïdaux selon des niveaux hiérarchiques: des fils, des faisceaux et le câble lui-même, les paramètres décrivant la forme géométrique d'un câble étant le rayon de l'hélice, le pas et l'angle d'inclinaison d'un fil dans un faisceau (Rw, Pw, Θw) et d'un faisceau dans un câble Rs, Ps, Θs);
   - à partir des paramètres décrivant la forme géométrique d'un fil dans un faisceau (Rw, Pw, Θw), utiliser un modèle mécanique du faisceau qui représente les propriétés du matériau de chaque fil, en considérant un comportement élastique linéaire, en spécifiant le module de Young (E) et le coefficient de Poisson (v), les paramètres décrivant le comportement mécanique du faisceau étant la force axiale ($F_a$), le moment de torsion ($M_{s1}$) et le moment de flexion ($M_{s2}$);
   - à partir des paramètres décrivant la forme géométrique d'un faisceau dans un câble (Rs, Ps, Θs), utiliser un modèle mécanique du câble qui représente l'action combinée des charges de traction et d'une courbure imposée par la flexion, les paramètres décrivant le comportement mécanique du câble étant la charge de traction (Fr) et le moment de flexion ($M_r$);
   - sur la base du fait que chaque fois qu'un faisceau ou un câble formé de fils est courbé cycliquement sur une poulie, une partie de l'énergie mécanique totale fournie à l'entrée du système est dissipée en raison de phénomènes de frottement qui sont fonction des paramètres décrivant le comportement mécanique du faisceau et du câble, utiliser un modèle thermique pour évaluer l'augmentation de la température du câble (Ts) par rapport à la température ambiante, le modèle thermique comprenant deux sources principales de dissipation: le frottement entre faisceaux ou un câble et une poulie et le frottement entre des fils ou entre des faisceaux;
   - comparer l'augmentation de la température (Ts) du câble obtenue au moyen du modèle thermique avec une valeur d'un seuil de température prédéterminé.

2. Procédé selon la revendication 1, dans lequel le modèle mécanique du faisceau est calculé par des équations linéaires constituant des sections transversales:

$$\begin{cases} F_s = EA_s \varepsilon_s + C_s \chi_{s1} \\ M_{s1} = C_s \varepsilon_s + GJ_s \chi_{s1} \\ M_{s2} = EI_s \chi_{s2} \end{cases}$$

où Fs est la force axiale, $M_{s1}$ est le moment de torsion, $M_{S2}$ est le moment de flexion et $EA_s$, $GJ_s$ et $EI_s$ se réfèrent respectivement aux coefficients de rigidité axiaux, de torsion et de flexion déterminés à partir du rayon de l'hélice, du pas et de l'angle d'inclinaison d'un fil dans un faisceau (Rw, Pw, ΘW), alors que $C_s$ est le terme d'une rigidité de couplage axial-torsionnelle, $X_{s1}$ est la courbure de torsion, $X_{S2}$ est la courbure de flexion et $\varepsilon$ est la dilatation axiale.

3. Procédé selon la revendication 1 ou 2, dans lequel le modèle mécanique du câble est calculé au moyen de l'équation suivante:

$$\begin{cases} F_r = EA_r \varepsilon_r \\ M_r = EI_{min}\chi_r + M_r^{add}\left(\varepsilon_r, \chi_r\right) \end{cases}$$

où $F_r$ est la charge de traction, $X_r$ est la courbure de flexion, $EA_r$ est la rigidité axiale directe du câble, $EI_{min}$ est la rigidité minimale de flexion dans la section transversale du câble, $Mr^{add}$ est une contribution non linéaire au moment de flexion total, $\varepsilon$, et $M_r$ sont la dilatation axiale et le moment de flexion résultant du câble, respectivement.

4. Procédé selon la revendication 3, dans lequel la rigidité axiale directe du câble est estimée comme suit:

$$EA_r = \sum_{j=0}^{m} n_j \ \cos^3\left(\alpha_{s,j}\right) EA_{s,j}$$

où m est le nombre de couches du câble, $n_j$ est le nombre de faisceaux appartenant à la j-ème couche, l'indice j = 0 fait référence au noyau du câble, est $c_{s,j} = \tan^{-1}(2\pi R_{s,j}/P_{s,j})$ est l'angle de pose des faisceaux dans la j-ème couche.

5. Procédé selon la revendication 3 ou 4, dans lequel la valeur théorique minimale de la rigidité en flexion en section transversale du câble, le coefficient de rigidité ($EI_{min}$), est défini comme suit:

$$EI_{min} = \sum_{j=0}^{m} \frac{n_j}{2}\cos\left(\alpha_{s,j}\right)\left(\sin\left(\alpha_{s,j}\right)GJ_{s,j} + \left(1+\cos^2\left(\alpha_{s,j}\right)\right)EI_{s,j}\right)$$

6. Procédé selon l'une des revendications 3 à 5, dans lequel $Mr^{add}$ est non-linéaire et prend en compte la contribution au moment de flexion total de la section transversale provoqué par la force axiale ($F_s$) agissant dans les faisceaux individuels, et est défini comme suit:

$$M_r^{add} = \sum_{j=0}^{m}\sum_{i=1}^{n_j} R_{s,j}\cos\left(\alpha_{s,j}\right)F_{s,i}\left(\theta_{s,i}\right)\sin\left(\theta_{s,i}\right)$$

où $Fs = F_{s,a} + F_{a,b}$ et $F_{s,a}$ est dû à la charge axiale $F_r$ et $F_{a,b}$ est du à la flexion du faisceau et à la courbure de torsion.

7. Procédé selon l'une des revendications 3 à 6, dans lequel la force axiale $F_{s,b}$ du faisceau est évaluée comme

$$F_{s,b}\left(\theta_s\right) = \cos^2\left(\alpha_s\right)R_s \ EA_s \ \sin\left(\theta_s\right)\chi_r$$

où $X_r$ est la courbure de flexion.

8. Procédé selon l'une des revendications précédentes, dans lequel le modèle thermique comprend un calcul préalable pour évaluer la température dans le câble, ledit calcul préliminaire comprenant les opérations suivantes:

    a. Définir la température de l'air ambiant ($T_a$);
    b. Définir la vitesse de l'air (V(;
    c. Définir la densité de l'air ($\rho_f$);
    d. Définir la viscosité absolue de l'air ($\rho_f$);
    e. Définir le diamètre du câble (d);
    f. Définir le coefficient de capacité d'émission du câble (e);
    g. Définir le coefficient d'absorption solaire (a) ;
    h. Définir la chaleur totale émise par le soleil et le ciel ($Q_s$) ;
    i. Définir l'énergie dissipée par unité de longueur ($A_c$)

$$A_c = 2M_0\chi_{max}$$

où $M_0$ est la valeur du moment de flexion du câble et $X_{max}$ est la courbure imposée par la poulie;
j. Définir la durée du cycle ($t_c$);
k. Évaluer la puissance générée par unité de longueur d'un câble (g)

$$g = \frac{A_c}{t_c}$$

i. Évaluez l'augmentation de la température du câble ($T_a$).

9. Procédé selon la revendication 8, dans lequel le modèle thermique comprend des calculs itératifs pour stabiliser la température dans le câble, lesdits calculs itératifs comprenant les opérations suivantes:

m. Définir la quantité de perte de chaleur par convection du câble par unité de longueur ($q_c$)

$$q_c = \max\left\{q_{c1}, q_{c2}\right\}$$

où

$$q_{c1} = \left(1.01 + 0.371\left(\frac{d\rho_f V}{\mu_f}\right)^{0.52}\right) k_f \left(T_s - T_a\right)$$

$$q_{c2} = 0.1695\left(\frac{d\rho_f V}{\mu_c}\right)^{0.60} k_f \left(T_s - T_a\right)$$

et où $q_{c1}$ et $q_{c2}$ sont deux formules empiriques pour calculer le taux de perte de chaleur par convection par unité de longueur et k se réfère à la conductivité thermique de l'air.
n. Définir le taux de perte de chaleur émise par le câble par unité de longueur (qr)

$$q_r = 0.138 d'e\left(\left(\frac{K_s}{100}\right)^4 - \left(\frac{K_a}{100}\right)^4\right)$$

où d' est le diamètre du faisceau, $K_s$ est la température (moyenne) du faisceau et Ka est la température ambiante;
o. Définir le gain de chaleur solaire par unité de longueur ($q_s$)

$$q_s = a Q_s \sin\left(\theta\right) A'$$

où a est le coefficient d'absorption solaire, Qa est la chaleur totale rayonnée par le soleil et le ciel, q est l'angle d'incidence réel des rayons solaires et A' = d'/12 est la surface projetée du faisceau;
p. Résoudre l'équation

$$q_c + q_r = g + q_s$$

pour l'augmentation de la température du câble ($T_a$)
q. Répéter les opérations de m à p avec la nouvelle valeur d'augmentation de la température du câble ($T_a$), calculée dans l'opération précédente p, jusqu'à ce que l'augmentation de la température du câble ($T_a$) soit stabilisée.

Fig.1

Fig.2

Fig.3

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHREMS K.** Wear-related fatigue in a wire rope failure. *Journal of Testing and Evaluation,* 1994, vol. 22 (5), 490-499, https:// doi.org/10.1520/JTE12670J
- **FOTI, F. ; MARTINELLI, L. ; PEROTTI, F.** A new approach to the definition of self-damping for stranded cables. *Meccanica,* 2016, vol. 51, 2827-2845, https:// doi.org/10.1007/s11012-016-0444-9
- **FOTI, F. ; MARTINELLI, L.** Mechanical modeling of metallic strands subjected to tension, torsion and bending. *International Journal of Solids and Structures,* August 2016, vol. 91, 1-17, https://doi.org/10.1016/j.ijsolstr.2016.04.034
- **CARDOU, A. ; JOLICOEUR, C.** Mechanical models of helical strands. *Applied Mechanics Reviews,* 1997, vol. 50 (1), 1-14, https://doi.org/10.1115/1.3101684
- *ANSI/IEEE St 738-1986,* 31 December 1985, 1-19, https://doi.org/10.1109/IEEESTD.1985.6135468